# EUROPÄISCHE PATENTSCHRIFT

(11) **EP 1 344 707 B1**
(45) Veröffentlichungstag und Bekanntmachung des Hinweises auf die Patenterteilung: **24.05.2006**
(21) Anmeldenummer: 02024230.1
(22) Anmeldetag: 31.10.2002
(51) Int. Cl.: B62D 1/19, F16F 7/12

(54) **Lenkspindel einer Lenksäule für ein Kraftfahrzeug**
Steering shaft of a steering column for a motor vehicle
Arbre de direction de colonne de direction pour un véhicule automobile

(30) Priorität: 14.03.2002 DE 10211743
(43) Veröffentlichungstag der Anmeldung: 17.09.2003
(73) Patentinhaber: ThyssenKrupp Presta AG, 9492 Eschen (LI)
(72) Erfinder: Lutz, Christian, Ing., 6714 Nüziders (AT)
(74) Vertreter: Hefel, Herbert

(56) Entgegenhaltungen:
- EP-A- 0 091 671
- DE-A- 2 459 246
- US-A- 3 508 633
- PATENT ABSTRACTS OF JAPAN vol. 008, no. 203 (M-326), 18. September 1984 (1984-09-18) & JP 59 092254 A (MITSUBISHI DENKI KK), 28. Mai 1984 (1984-05-28)

## Beschreibung

Die Erfindung betrifft ein Verfahren zur Herstellung einer Lenkspindel einer Lenksäule für ein Kraftfahrzeug, mit mindestens einem zur Deformation bei einem Crash vorgesehenen Abschnitt, wobei mindestens ein solcher deformierbarer Abschnitt als Wellrohr ausgebildet wird, das zumindest über einen Teil seiner Längserstreckung, der zumindest einen der Wellenberge des Wellrohres umfaßt, mindestens zwei gewellte Schichten aufweist.

Lenkspindeln von Lenksäulen mit Wellrohren als deformierbare Abschnitte sind bekannt, beispielsweise aus der DE 196 31 214 A1, EP 0 709 274 A1, EP 0 872 401 A2 und EP 0 701 070 A1. Wellrohre als im Crash-Fall deformierbare Abschnitte können in der Lenksäule in unterschiedlichen Abschnitten eingesetzt werden. Es kann ein einzelnes Wellrohr zum Einsatz kommen oder mehrere Wellrohre in unterschiedlichen Abschnitten der Lenkspindel können eingesetzt werden. Deformierbare Abschnitte in Form von Wellrohren können im Crash-Fall einerseits in achsialer Richtung komprimiert werden, andererseits können diese bei einer nicht achsialen Krafteinwirkung seitlich ausbiegen.

Zur Herstellung solcher Wellrohre für deformierbare Abschnitte von Lenkspindeln sind unterschiedliche Verfahren bekannt geworden. Beispielsweise sind solche Verfahren in der EP 661 117 A1, der EP 298 832 B1, der DE 2 027 638 A1 und der EP 0 782 891 A1 beschrieben. Zur Deformation bei einem Crash vorgesehene Wellrohre für Lenkspindeln müssen spezifischen Anforderungen genügen. Einerseits müssen sie im Crash-Fall welch genug sein, um ihre Verformung zu ermöglichen, wobei diese Verformung in definierter Weise erfolgen soll. Andererseits müssen sie über ihre vorgesehene Lebensdauer die beim gewöhnlichen Betrieb auftretenden Belastungen zuverlässig aufnehmen. Es werden daher an diese Teile hohe Anforderungen gestellt, die durch umfangreiche Tests sichergestellt werden sollen. In diesen Tests wird unter anderem die Stabilität gegenüber der Aufnahme von Drehmomenten vorgeschriebener Größen sowie gegenüber der Aufnahme von statischen, dynamischen und schwingenden Belastungen geprüft. Weiters wird das Verformungsverhalten getestet. Neben der Erfüllung dieser unterschiedlichen Anforderungen sollen diese Teile aus Platzgründen möglichst kleine Abmessungen aufweisen.

Um den unterschiedlichen, teils widersprüchlichen Anforderungen an Wellrohre als deformierbare Abschnitte in Lenkspindeln besser zu entsprechen, wird in der EP 0782 891 B1 ein Verfahren zur Herstellung eines solchen Wellrohres beschrieben, bei dem es zu einer Vergrößerung der Wandstärke im Bereich der Wellentäler (im Vergleich zu den Wellenbergen) kommt. Im Bereich der Wellentäler treten bei der Übertragung von Drehmomenten die größten Belastungen auf das Wellenrohr auf, da in diesem Bereich die Wandung des Wellrohres den kleinsten Abstand von der zentralen Achse aufweist.

Die DE 2 027 638 A1 lehrt weiters ein Verfahren zur Herstellung eines radial gewellten Rohres, bei dem eine gleich bleibende Wandstärke oder eine unterschiedliche Wandstärke und/oder Profilierung des Wellrohres von Welle zu Welle oder zonenweise erreicht werden kann. Es kann dadurch ein Wellrohr für einen deformierbaren Abschnitt einer Lenkspindel mit unterschiedlichen Knautschzonen bereitgestellt werden.

Aus der DE 32 24 308 C2 und der CH-PS 324 476 sind gewellte mehrschichtige Metallbalge bekannt, die als Teile von Flüssigkeits- oder Gasleitungen, insbesondere zum abgedichteten Verbinden von relativ zueinander beweglichen Teilen eingesetzt werden. Es handelt sich hier um ein von Lenksäulen für Kraftfahrzeuge weit entferntes und nicht vergleichbares technisches Gebiet, bei dem andere Probleme und Anforderungen zum Tragen kommen.

Ein gemäß einem Verfahren der eingangs genannten Art ausgebidletes Wellrohr ist weiters aus der DE 25 44 769 A1 bekannt. Bei einem solchen mehrschichtigen, beispielsweise zweischichtigen Aufbau des Wellrohres wird die Stabilität gegenüber einem um die Längsachse des Wellrohres wirkenden Drehmoment im Vergleich zu einem herkömmlichen einschichtigen Aufbau mit einer insgesamt gleichen Gesamtdicke der Wandstärke nicht oder nur wenig verringert, während eine Verformung im Sinne einer Kompression in achsialer Richtung bereits bei einer vergleichsweise deutlich geringeren einwirkenden Kraft ermöglicht wird. Dies führt zu gegenüber herkömmlichen Lenkspindeln deutlich verbesserten Crash-Eigenschaften bei hohen übertragbaren Drehmomenten, wobei auch der Außendurchmesser des verwendeten Wellrohres verringert werden kann. Die Herstellung des zweischichtigen Rohres erfolgt durch ein Wickelverfahren, wobei die von einer Trommel ablaufenden Bänder an ihren Längskanten verschweißt werden und die durch das Wickelverfahren hergestellten Teilrohre gemeinsam gewellt werden.

Aus der US 3 508 633 A ist weiters ein im Crash-Fall deformierbarer Abschnitt bekannt, welcher zusätzlich zu einem von einer einzelnen Schicht gebildeten äußeren Wellrohr eine Achsialführungseinrichtung aufweist, die durch ein glattes und mit Abstand zum äußeren Wellrohr angeordnetes Innenrohr gebildet wird, welches sich über den gewellten Bereich des äußeren Wellrohres erstreckt und in Achsialrichtung des Wellrohres verschiebbar gelagert ist, um einem seitlichen Ausknicken des Wellrohrs entgegenzuwirken.

Aus der EP 0 091 671 A2 ist eine Sicherheitslenksäule mit einem deformierbaren Abschnitt bekannt, der von einer Kunststoff-Gitterstruktur gebildet wird. Es kann weiters eine zusätzliche innere Schicht in Form eines Leichtmetallrohrs vorgesehen sein, auf welches der Wickelvorgang zur Ausbildung der das Außenrohr bildenden Gitterstruktur erfolgt. Um eine begrenzte Winkelbeweglichkeit bereitzustellen, können die Gitterstruktur und das Leichtmetallrohr gewellt ausgebildet sein.

Ein deformierbarer Abschnitt aus einem faserverstärkten Kunststoff, der mehrere Lagen aus Karbonfaser mit dazwischengeschalteten Kunststofflagen aufweist, wobei der deformierbare Abschnitt wellenartige Vorsprünge und Vertiefungen aufweist, ist weiters aus Patent Abstracts of Japan 008,203(M-326) bzw. der JP 59092254 A bekannt.

Die DE 24 59 246 A1 zeigt weiters ein Wellrohrteil einer rohrförmigen Kraftfahrzeug-Lenkspindel, dessen Wandstärke über den Verlauf des Wellrohrs zunimmt, um Zonen unterschiedlicher Stauchbelastbarkeit auszubilden. Das Wellrohr ist einschichtig ausgebildet.

Aufgabe der Erfindung ist es, ein Verfahren zur Herstellung einer Lenkspindel der eingangs genannten Art mit mindestens einem deformierbaren Abschnitt, der durch ein Wellrohr gebildet wird, bereitzustellen, wobei bei der durch das erfindungsgemäße Verfahren herstellten Lenkspindel die gleichzeitigen Anforderungen einer ausreichenden Stabilität gegenüber einem um die Längsachse des Wellrohres wirkenden Drehmoment und den im normalen Betrieb auftretenden Belastungen einerseits und einer geeigneten Verformbarkeit im Crash-Fall andererseits noch besser als bei den bisher bekannten Einrichtungen erfüllt werden können. Erfindungsgemäß gelingt dies durch ein Verfahren mit den Merkmalen des Anspruchs 1.

Durch die Erfindung kann die Biegesteifigkeit des Wellrohrs in der Nähe des benachbarten Kardangelenks, wo die stärksten Biegebeanspruchungen auftreten, verbessert werden. Falls in der Lenksäule auf beiden Seiten des Wellrohrs Kardangelenke vorgesehen sind, so wird als das "benachbarte Kardangelenk" dasjenige angesehen, welches dem dem jeweiligen Kardangelenk zugewandten Ende des Wellrohrs näher liegt. Beispielsweise kann das eine Ende des Wellrohrs direkt mit einer Gelenkgabel des Kardangelenks verbunden sein, während das andere Ende des Wellrohres mit einer zwischen dem Wellrohr und dem Kardangelenk liegenden Verbindungswelle verbunden ist.

In einer vorteilhaften Ausführungsform der Erfindung kann zumindest eine der Schichten des Wellrohres mit einer Mehrzahl von im Bereich von Wellenbergen angeordneten Öffnungen versehen sein. Da die Wellenberge bei der Übertragung von um die Längsachse der Lenkspindel wirkenden Drehmomenten aufgrund ihres größeren Abstands von der zentralen Achse geringeren Spannungen ausgesetzt sind, kann dadurch ein deformierbarer Abschnitt einer Lenkspindel bereitgestellt werden, bei dem bei einer den Anforderungen entsprechenden Stabilität gegenüber der Übertragung von um die Längsachse wirkenden Drehmomenten ein nochmals verbessertes Verformungsverhalten im Crash-Fall, insbesondere eine leichtere Abbiegung bei einer nicht achsial einwirkenden Kraft ermöglicht wird.

Weitere Vorteile und Einzelheiten der Erfindung werden im folgenden anhand der in der beiliegenden Zeichnung dargestellten Ausführungsbeispiele erläutert. In der Zeichnung zeigen:
die Fig. 1 und 2 stark schematisierte Darstellungen von mögiichen Ausbildungen von Lenksäulen;
die Fig. 3 bis 7 Längsmittelschnitte von verschiedenen Herstellungsschritten bei der Herstellung eines Wellrohres;
Fig. 8 einen Querschnitt des Rohres von Fig. 4;
Fig. 9 einen vergrößerten Ausschnitt von Fig. 7;
Fig. 10 einen Längsmittelschnitt durch einen Teil der Lenkspindel, die einen deformierbaren Abschnitt in Form eines Wellrohres enthält;
Fig. 11 eine Fig. 10 entsprechende Abbildung eines weiteren Ausführungsbeispiels der Erfindung;
Fig. 12 eine Fig. 9 entsprechende vergrößerte Teilansicht eines Wellbalges gemäß einem weiteren Ausführungsbeispiel der Erfindung und
die Fig. 13, 14 und 15 schematische Darstellungen von Längsmittelschnitten einer Wandung eines Rohres mit Bereichen unterschiedlicher Wandstärke.

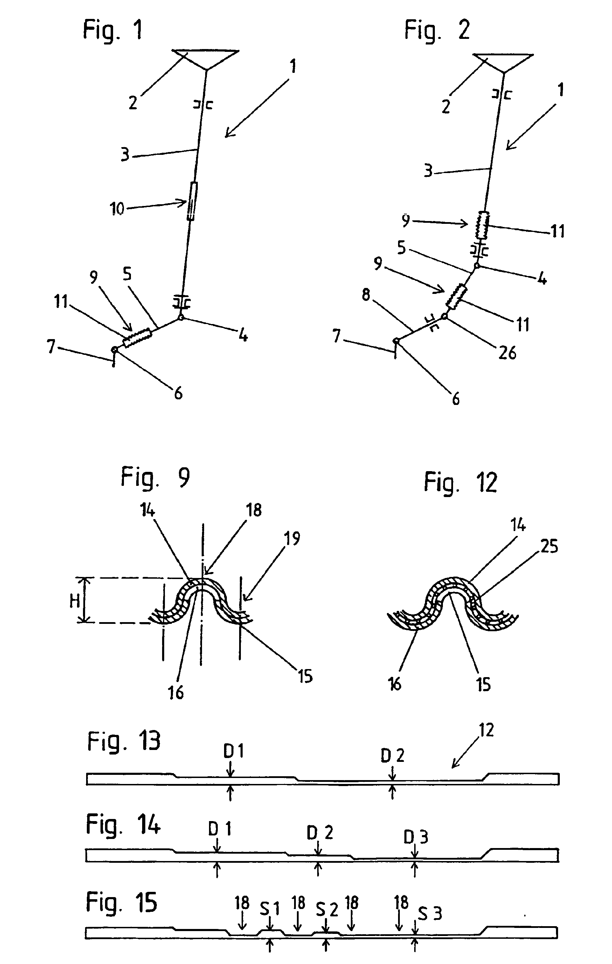

Die Fig. 1 und 2 zeigen in stark schematisierter Form zwei unterschiedliche Ausbildungen von Lenksäulen 1. Bei der in Fig. 1 dargestellten Ausführungsform schließt an das Lenkrad 2 ein erster Teil 3 der Lenkspindel an, der über eine gelenkige Verbindung 4 in Form eines Kardangelenks mit einem zweiten Teil 5 verbunden ist, welcher auch als Zwischenwelle bezeichnet wird (die evtl. einen Dämpfer enthält). Der Teil 5 steht über eine gelenkige Verbindung 6 mit einem Lenkstockzapfen 7 des Lenkgetriebes in Verbindung. Bei der Ausführungsform gemäß der Fig. 2 ist zwischen dem zweiten Teil 5 und dem Lenkstockzapfen 7 ein weiterer Teil 8 vorhanden, der mit dem Teil 5 über eine gelenkige Verbindung 26 verbunden ist. Die gelenkigen Verbindungen 6 und 26 sind ebenfalls als Kardangelenke ausgeführt. Die Lagerungen der Lenkspindel und die Aufhängung der Lenksäule am Chassis, die in bekannter Weise verstellbar ausgebildet sein kann, sind in den Fig. 1 und 2 nicht im einzelnen dargestellt und können in herkömmlicher Weise ausgebildet sein. Eine erfindungsgemäße Lenkspindel kann auch anders aufgebaut sein, beispielsweise mehr oder weniger Teile 3, 5 und 8 aufweisen.

In mindestens einem der Teile 3, 5 und 8 der Lenkspindel ist ein zur Deformation bei einem Crash vorgesehener Abschnitt 9, 10 angeordnet, wobei mindestens ein solcher deformierbarer Abschnitt 9 als Wellrohr 11 ausgebildet ist. Neben in Form von Wellrohren 11 ausgebildeten deformierbaren Abschnitten 9 können auch in anderer Form ausgebildete verkürzbare Abschnitte 10 vorgesehen sein, beispielsweise in Form von teilweise ineinandergeschobenen Rohren, die im Crash-Fall achsial ineinander einschiebbar sind. Solche Ausbildungen von verkürzbaren Abschnitten sind bekannt. Es können ein oder mehrere als Wellrohr 11 ausgebildete deformierbare Abschnitte 9 vorhanden sein, die in einem oder mehreren der Teile 3, 5 und 8 der Lenkspindel angeordnet sind.

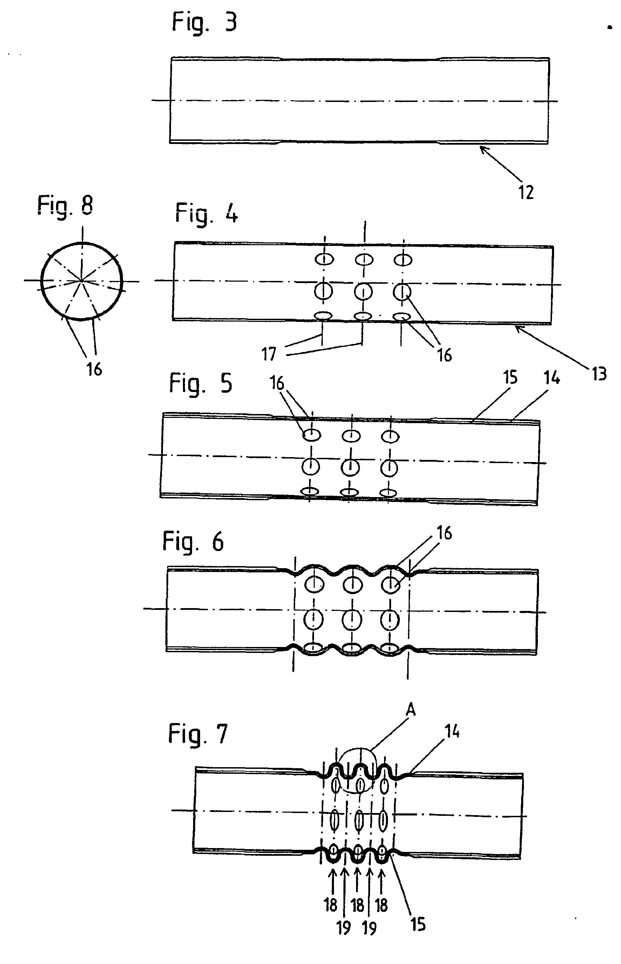

Anhand der Fig. 3 bis 9 soll im folgenden ein mögliches Herstellungsverfahren eines Ausführungsbeispiels eines Wellrohrs für eine erfindungsgemäße Lenkspindel kurz erläutert werden. Das Wellrohr ist hier über seine gesamte Länge zweischichtig ausgebildet und das zur Ausbildung der äußeren Schicht 14 verwendete Rohr 12 besitzt einen geschlossenen Mantel. Das Rohr 12 besitzt im gezeigten Ausführungsbeispiel verdickte Enden. Im Bereich zwischen diesen verdickten Enden ist die Wandstärke des Rohrs demgegenüber geringer. In diesem mittleren Bereich des Rohrs ist in Fig. 3 ebenso wie in den Fig. 5 bis 7, 10 und 11 keine Änderung der Wandstärke erkennbar (der Übersichtlichkeit halber in diesen Fig. nicht dargestellt). Eine solche ist jedoch vorhanden und in den Fig. 13 bis 15 überzeichnet dargestellt. Diese Fig. 13 bis 15 werden weiter unten genauer erläutert.

Das im fertiggestellten Zustand die innere Schicht 15 bildende Rohr 13 weist bei diesem Ausführungsbeispiel eine Mehrzahl von Öffnungen 16 auf. Entlang von gedachten Umfangslinien 17, bei denen beim fertiggestellten Wellrohr die Scheitel der Wellenberge liegen sollen, ist das Rohr 13 jeweils mit mehreren in Umfangsrichtung voneinander beabstandeten Öffnungen 16 versehen, beispielsweise können entlang einer Umfangslinie 17 jeweils sieben gleichmäßig voneinander beabstandete in diesem Ausführungsbeispiel kreisrunde Öffnungen 16 angeordnet sein.

Das Rohr 12 wird auf das Rohr 13 gefügt, wie dies in Fig. 5 dargestellt ist. Mittels eines Aufweitdorns kann das innere Rohr 13 in der Folge aufgeweitet werden, um die beiden Schichten 14, 15 eng aneinander anzulegen.

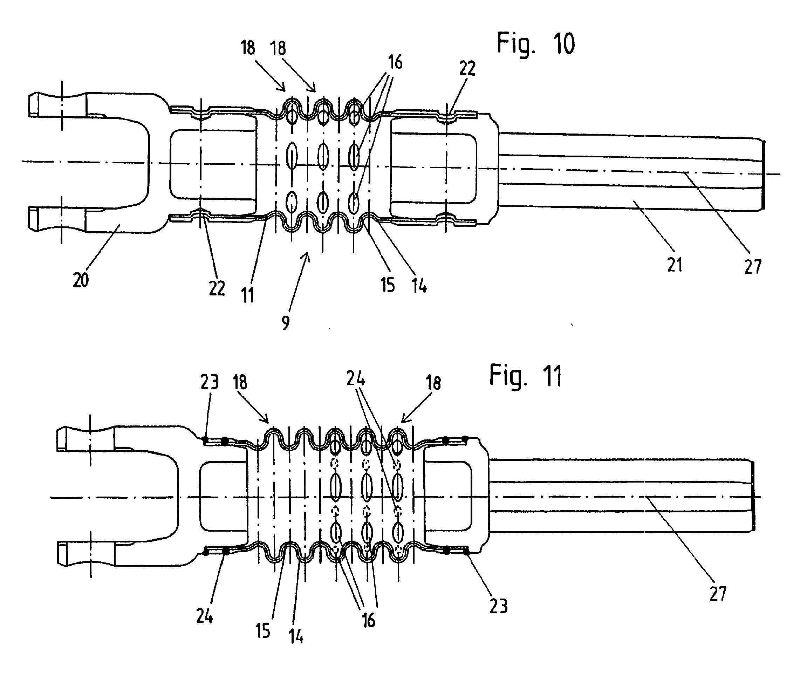

In der Folge werden die Wellungen ausgebildet, beispielsweise durch einen mehrstufigen Prozeß, wie er durch die Fig. 6 und 7 angedeutet ist. Hierbei kann beispielsweise ein Verfahren eingesetzt werden, wie dies in der in der Beschreibungseinleitung genannten EP 0782 891 B1 beschrieben ist. Hierbei wird zunächst die Rohrwandung durch von außen und innen gegen die Rohrwandung angepreßte Formwerkzeuge, welche Wellungen besitzen, mit einer Wellung versehen, wobei mehrere solche Formwerkzeuge mit einer zunehmend starken Wellung eingesetzt werden können. Weiters wird das so entsprechend Fig. 6 vorgeformte Rohr in achsialer Richtung zusammengeschoben, wobei das Rohr von innen mit einem Dorn gestützt wird und von außen Preßbacken in die einzelnen Wellentäler eingefahren werden, die in achsialer Richtung aufeinander zugeschoben werden. Bei dem so hergestellten zweischichtigen Wellrohr entsprechend Fig. 7 sind im Bereich der Wellenberge 18 in der inneren Schicht 15 eine Mehrzahl von Öffnungen 16 angeordnet. Beim gezeigten Ausführungsbeispiel sind alle Wellenberge mit mehreren in Umfangsrichtung voneinander beabstandeten Öffnungen 16 versehen. Die Wellentäler 19 sind dabei günstigerweise zumindest bis zu einem Viertel der Höhe H zwischen den Wellentälern 19 und den Wellenbergen 18 frei von Öffnungen 16 (vgl. Fig. 9). Durch die geschlossene äußere Schicht 14 wird beispielsweise ein Eindringen von korrosivem Salzwasser verhindert.

In der Folge kann das Wellrohr 11 in einen Teil 3, 5, 8 der Lenkspindel eingebaut werden. Beispielsweise ist in Fig. 10 einseitig eine Verbindung mit einer Gelenksgabel 20 und auf der anderen Seite eine Verbindung mit einer Welle 21 dargestellt. Bei der in Fig. 10 dargestellten Verbindung ist diese formschlüssig mittels Noppungen 22 ausgebildet, welche in entsprechende Ausnehmungen in der Gelenksgabel 20 bzw. Welle 21 eingreifen. Durch diese Noppungen 22 werden die beiden Schichten 14, 15 des Wellrohrs auch gegenüber einer gegenseitigen Verschiebung in Umfangsrichtung gesichert. Anstelle der Noppungen könnten auch andere formschlüssige Verbindungen, insbesondere Preßverbindungen, vorgesehen sein, beispielsweise Verzahnungen.

Bei dem in Fig. 11 dargestellten Ausführungsbeispiel der Erfindung ist das Wellrohr 11 mit der Gelenksgabel 20 und der Welle 21 über Verschweißungen 23 und/oder Verschweißungen 24 miteinander verbunden. Diese Verschweißungen 23 bzw. 24 können gleichzeitig eine Verbindung zwischen den beiden Schichten 14, 15 herstellen. Laser- bzw. Ultraschall-Verschweißungen 23, die beide Schichten 14, 15 durchsetzen und bis zur Gelenksgabel 20 oder Welle 21 reichen, können aus Sicherheitsgründen vorgesehen sein. Das Wellrohr 11 könnte auch einstückig mit einem anschließenden Teil der Lenkspindel ausgebildet sein.

Bei dem in Fig. 11 dargestellten Ausführungsbeispiel ist weiters nur ein Teil der Wellenberge 18 der inneren Schicht 15 mit Öffnungen 16 versehen, wobei die mit Öffnungen 16 versehenen Wellenberge 18 in einem Abschnitt der Längserstreckung des Wellrohrs liegen. Die beiden Wellenberge 18, die auf der dem benachbarten Kardangelenk 6, 26 zugewandten Seite des Wellrohres 11 liegen, sind dagegen frei von solchen Öffnungen, da in diesem Bereich beim gewöhnlichen Betrieb der Lenkspindel die größten vom benachbarten Kardangelenk herrührenden nicht achsialen Kräfte in Form von Biegebelastungen auftreten.

Grundsätzlich wäre es auch denkbar und möglich, in der äußeren Schicht 14 ebenfalls Öffnungen im Bereich der Wellenberge 18 vorzusehen. Solche Öffnungen 24 sind in Fig. 11 durch strichlierte Linien angedeutet. Vorteilhaft ist es hierbei, wenn die Öffnungen 24 gegenüber den Öffnungen 16 so versetzt sind, daß die Öffnungen 24 von der inneren Schicht 15 zum Inneren des Wellrohres 11 hin geschlossen sind.

Prinzipiell wäre es bei einer entsprechenden Dimensionierung der Schichten 14, 15 des Wellrohres 11 auch denkbar und möglich, auch im Bereich der Wellentäler 19 Öffnungen vorzusehen, wobei die Öffnungen im Wellental und die Öffnungen im Wellenberg so dimensioniert sind, daß die Schwächung durch die im Bereich der Wellentäler angebrachten Öffnungen geringer ist, als die Schwächung durch die Öffnungen 16, 24 im Bereich der Wellenberge.

Erfindungsgemäße Wellrohre könnten weiters auch ohne solche Öffnungen 16, 24 ausgebildet sein.

Wie aus den in den Fig. 13 bis 15 dargestellten Ausführungsbeispielen des Rohrs 12 dargestellt ist, ist das in den beschriebenen Ausführungsbeispielen verwendete äußere Rohr 12 in dem Bereich, in welchem im fertiggestellten Wellrohr die Wellungen liegen mit Bereichen unterschiedlicher Wandstärke versehen. Dies führt dazu, daß auch das fertiggestellte Wellrohr entsprechende Bereiche unterschiedlicher Wandstärken aufweist. Beim Ausführungsbeispiel gemäß Fig. 13 weist der Bereich des Rohres 12, in dem die Wellungen ausgebildet werden, zwei Abschnitte mit unterschiedlichen Wandstärken D1 und D2 auf, die stufenförmig aneinander anschließen. Der Abschnitt mit der größeren Wandstärke D1 liegt dabei auf der dem benachbarten Kardangelenk 6 bzw. 26 zugewandten Seite. Die Wellenberge 18 und Wellentäler 19, die im Abschnitt mit der Wandstärke D1 ausgebildet werden, weisen daher eine größere Wandstärke auf, als die Wellenberge und Wellentäler, die im Abschnitt mit der Wandstärke D2 ausgebildet werden. Wenn hierbei zur Ausbildung ein Verfahren eingesetzt wird, bei dem während des Ausbildens der Wellungen im Bereich der Wellentäler die Wandstärke gegenüber den Wellenbergen vergrößert wird (vgl. das aus der in der Beschreibungseinleitung genannten EP 0782 891 B1 bekannte Verfahren), so überlagern sich diese unterschiedlichen Wandstärkeänderungen.

Beim Ausführungsbeispiel gemäß Fig. 14 sind im Bereich, in dem die Wellungen ausgebildet werden, drei Abschnitte mit unterschiedlichen Wandstärken D1, D2, D3 vorgesehen, die stufenförmig aneinander anschließen, wobei die Wandstärke D2 größer ist als die Wandstärke D3 und die Wandstärke D1 größer ist als die Wandstärke D2 und im fertiggestellten Zustand der Lenkspindel das benachbarte Kardangelenk 6, 26 auf der Seite des Abschnittes mit der Wandstärke D1 des Rohres 12 an das fertiggestellte Wellrohr anschließt.

Ein weiteres Ausführungsbeispiel ist in Fig. 15 dargestellt. Hier sind die Stellen, an denen die Scheitel der Wellenberge ausgebildet werden mit dem Pfeil 18 bezeichnet. Zwischen diesen Wellenbergen werden Wellentäler ausgebildet, wobei auf der im fertiggestellten Zustand des Wellrohrs bzw. der Lenkspindel dem benachbarten Kardangelenk 6, 26 zugewandten Seite des Rohrs 12 das Rohr 12 im Bereich dieser Wellentäler mit Wandstärkeverdickungen versehen ist. Die erste dieser Wandstärkeverdickungen weist die Stärke S1 und die nächste eine demgegenüber etwas verringerte Stärke S2 auf. Im Bereich zwischen diesen Wandstärkeverdickungen S1, S2 sowie im in Fig. 15 rechts der Wandstärkeverdickung S2 liegenden Bereich weist das Rohr 12 eine Wandstärke mit der Dicke S3 auf. Im fertiggestellten Zustand des Wellrohres weisen somit die beiden am nächsten beim benachbarten Kardangelenk 6, 26 liegenden Wellentäler 19 eine größere Wandstärke als die übrigen Wellentäler auf, wobei das am nächsten beim benachbarten Kardangelenk 6, 26 liegende Wellental die größte Wandstärke besitzt. Auch wird durch die Wandstärkeverdickungen S1, S2 die Wandstärke der zugehörigen Wellentäler im Vergleich zu den benachbarten Wellenbergen vergrößert.

Anstelle des äußeren Rohrs 12 oder zusätzlich zu diesem könnte auch das innere Rohr 13 mit Wandstärkeänderungen der beschriebenen Art versehen sein, so daß im fertiggestellten Zustand des Wellrohres solche Wandstärkeänderungen nur oder auch in der inneren Schicht vorliegen.

Auch eine Ausbildung der zwei oder mehr Schichten 14, 15 des Wellrohrs 11 aus unterschiedlichen Materialien ist denkbar und möglich. So könnte die äußere Schicht 14 als Hitzeschild wirken und zwischen der äußeren Schicht 14 und der aus einem vergleichsweise kostengünstigeren Material bestehende innere Schicht 15 ein Distanzmaterial, beispielsweise in Form eines Metallgeflechtes oder Drahtgitters 25 vorgesehen sein, wie dies in Fig. 12 schematisch dargestellt ist. Auch könnte eine zusätzliche äußere Schicht als Korrosionsschutz vorgesehen sein, z.B. eine vergleichsweise dünne Schicht aus Edelstahl. Auch alle Schichten des Wellrohres könnten aus Edelstahl (Niro bzw. Inox) bestehen.

Die mehrschichtige Ausbildung des Wellrohres könnte sich auch nur über einen Teil seiner Längserstreckung ausdehnen, beispielsweise über den gewellten Teil seiner Längserstreckung. Zumindest ist das Wellrohr über einen Teil seiner Längserstreckung, der zumindest einen der Wellenberge und vorzugsweise auch eines der Wellentäler des Wellrohres umfaßt, mehrschichtig ausgebildet. Obwohl eine zweischichtige Ausbildung als vorteilhaft angesehen wird, wäre grundsätzliche auch eine drei- oder mehrschichtige Ausbildung denkbar und möglich. Bei einer dreischichtigen Ausbildung könnten die Wandstärken der einzelnen Schichten beispielsweise im Bereich von ca. 0,4mm liegen.

Weiters könnte sich auch die Höhe H der Wellung ändern, wobei der Abstand des Wellentals von der Längsachse 27 des Wellrohrs von einem oder mehreren dem benachbarten Kardangelenk 6, 26 benachbarten Wellentälern größer ist als der jenige von diesem Kardangelenk 6, 26 weiter entfernt liegenden Wellentälern. Das Wellrohr wird dadurch in der Nähe des benachbarten Kardangelenks 6, 26, wo die stärksten Biegebeanspruchungen auftreten, biegesteifer, wobei die Höhe H der Wellung in diesem Bereich geringer ist.

Bei einer erfindungsgemäßen Ausbildung kann die Lenkspindel in verbesserter Weise einerseits an die beim gewöhnlichen Betrieb auftretenden Belastungen andererseits an die Erfordernisse für den Crash-Fall angepaßt sein.

### Legende zu den Hinweisziffern:

- 1: Lenksäule
- 2: Lenkrad
- 3: Teil der Lenkspindel
- 4: gelenkige Verbindung
- 5: Teil der Lenkspindel
- 6: gelenkige Verbindung
- 7: Lenkstockzapfen
- 8: Teil der Lenkspindel
- 9: deformierbarer Abschnitt
- 10: zusammenschiebbarer Abschnitt
- 11: Wellrohr
- 12: Rohr
- 13: Rohr
- 14: äußere Schicht
- 15: innere Schicht
- 16: Öffnung
- 17: Umfangslinie
- 18: Wellenberg
- 19: Wellental
- 20: Gelenkskabel
- 21: Welle
- 22: Nocken
- 23: Verschweißung
- 24: Öffnung
- 25: Drahtgitter
- 26: gelenkige Verbindung
- 27: Längsachse

## Patentansprüche

1. Verfahren zur Herstellung einer Lenkspindel einer Lenksäule (1) für ein Kraftfahrzeug, mit mindestens einem zur Deformation bei einem Crash vorgesehenen Abschnitt (9, 10), wobei mindestens ein solcher deformierbarer Abschnitt (9) als Wellrohr (11) ausgebildet wird, das zumindest über einen Teil seiner Längserstreckung, der zumindest einen der Wellenberge (18) des Wellrohres (11) umfaßt, mindestens zwei gewellte Schichten aufweist, **dadurch gekennzeichnet, daß** zur Herstellung des als Wellrohr (11) ausgebildeten deformierbaren Abschnitts (9) mindestens zwei Rohre (12, 13), die die Schichten (14, 15) des fertiggestellten Wellrohrs (11) ausbilden und von denen zumindest eines in dem Bereich, in welchem im fertiggestellten Zustand des Wellrohrs (11) die Wellungen liegen, mit Bereichen unterschiedlicher Wandstärke versehen worden ist, ineinander geschoben werden und die ineinander geschobenen Rohre (12, 13) gemeinsam mit Wellungen versehen werden, wobei im fertiggestellten Zustand des Wellrohrs (11) die in einem jeweiligen Wellental (19) des Wellrohres (11) und/oder die in einem jeweiligen Wellenberg (18) des Wellrohres (11) vorliegende Wandstärke von zumindest einer der Schichten (14, 15) sich über den Bereich der Wellenberge (18) bzw. Wellentäler (19) zwischen der dem benachbarten Kardangelenk (6, 26) zugewandten Seite und der dem benachbarten Kardangelenk (6,26) abgewandten Seite des Wellrohres (11) verringert.

2. Verfahren nach Anspruch 1, **dadurch gekennzeichnet, daß** sich die Wandstärke des Wellrohres (11) zumindest über einen Teil des Bereichs der Wellenberge (18) und Wellentäler (19) kontinuierlich zwischen einem Wellental (19) und dem nächsten bzw. zwischen einem Wellenberg (18) und dem nächsten verringert.

3. Verfahren nach Anspruch 1, **dadurch gekennzeichnet, daß** sich die in den Wellentäler (19) und/oder Wellenbergen (18) vorliegende Wandstärke des Wellrohres (11) stufenförmig ändert, wobei vorzugsweise eine oder zwei solche Stufen vorgesehen sind.

4. Verfahren nach einem der Ansprüche 1 bis 3, **dadurch gekennzeichnet, daß** die Wandstärke von zumindest einer der Schichten (14, 15) zumindest im Bereich eines Wellenberges (18) geringer ist als im benachbarten Wellental (19), vorzugsweise um zumindest 20 %.

5. Verfahren nach Anspruch 4, **dadurch gekennzeichnet, daß** die Wandstärke von zumindest einer der Schichten (14, 15) jedes Wellenberges (18) geringer ist als in einem benachbarten Wellental (19), vorzugsweise um zumindest 10%.

6. Verfahren nach einem der Ansprüche 1 bis 5, **dadurch gekennzeichnet, daß** das Wellrohr (11) zumindest über den Teil seiner Längserstreckung, in welchem die Wellenberge (18) und Wellentäler (19) angeordnet sind, vorzugsweise über seine gesamte Länge, zwei- oder mehrschichtig ausgebildet ist.

7. Verfahren nach Ansprüche 1 bis 6, **dadurch gekennzeichnet, daß** zumindest eine der Schichten (14, 15) des Wellrohres (11) mit einer Mehrzahl von im Bereich von Wellenbergen (18) angeordneten Öffnungen (16, 24) versehen sind.

8. Verfahren nach Anspruch 7, **dadurch gekennzeichnet, daß** zumindest ein Wellenberg (18), vorzugsweise mehrere Wellenberge (18), mit mehreren in Umfangsrichtung des Wellrohres (11) voneinander beabstandeten Öffnungen (16, 24) versehen wird/werden.

9. Verfahren nach Anspruch 7 oder Anspruch 8, **dadurch gekennzeichnet, daß** zumindest der an das einem benachbarten Kardangelenk (6, 26) zugewandte Ende des Wellrohres (11) anschließende Wellenberg (18) für alle Schichten (14, 15) des Wellrohres (11) frei von Öffnungen (16, 24) ist, vorzugsweise mehrere an dieses Ende des Wellrohres (11) anschließende Wellenberge (18) frei von Öffnungen (16, 24) sind.

10. Verfahren nach einem der Ansprüche 7 bis 9, **dadurch gekennzeichnet, daß** die Wellentäler (19) zumindest bis zu einem Viertel der Höhe (H) zwischen Wellental (19) und Wellenberg (18) frei von Öffnungen (16, 24) sind.

11. Verfahren nach einem der Ansprüche 1 bis 10, **dadurch gekennzeichnet, daß** die Schichten (14, 15) aus verschiedenen Materialien bestehen.

12. Verfahren nach Anspruch 11, **dadurch gekennzeichnet, daß** die äußere Schicht aus Edelstahl besteht.

13. Verfahren nach einem der Ansprüche 1 bis 12, **dadurch gekennzeichnet, daß** zwischen zwei Schichten (14, 15) ein Distanzmaterial, vorzugsweise Metallgeflecht oder Drahtgitter (25), zumindest über einen Teil der Länge des Wellrohres angeordnet ist.

14. Verfahren nach einem der Ansprüche 1 bis 13, **dadurch gekennzeichnet, daß** sich die Höhe (H) der Wellung über den gewellten Bereich ändert, wobei der Abstand des Wellentals von der Längsachse (27) des Wellrohrs von einem oder mehreren dem benachbarten Kardangelenk (6, 26) benachbarten Wellentäler größer ist als derjenige von von diesem Kardangelenk (6, 26) weiter entfernt liegenden Wellentälern.

## Claims

1. A method for producing a steering shaft of a steering column (1) for a motor vehicle, comprising at least one segment (9, 10) provided for deformation in the event of a crash, at least one such deformable segment (9) being in the form of a corrugated tube (11) which has at least two corrugated layers at least over a part of its longitudinal extent that includes at least one of the corrugation peaks (18) of the corrugated tube (11), **characterised in that**, in order to produce the deformable segment (9) in the form of a corrugated tube (11), at least two tubes (12, 13) which form the layers (14, 15) of the finished corrugated tube (11), and at least one of which is provided with regions of varying wall thickness in the region in which the corrugations are located in the finished state of the corrugated tube (11), are telescoped into one another and the tubes (12, 13) telescoped into one another are jointly provided with corrugations, the wall thickness of at least one of the layers (14, 15) existing in a respective corrugation trough (19) of the corrugated tube (11) and/or in a respective corrugation peak (18) of the corrugated tube (11) decreasing in the finished state of the corrugated tube (11) over the region of the wave peaks (18) or wave troughs (19) between the side of the corrugated tube (11) directed towards the adjacent Cardan joint (6, 26) and the side thereof remote from the adjacent Cardan joint (6, 26).

2. A method according to Claim 1, **characterised in that** the wall thickness of the corrugated tube (11) decreases at least over a part of the region of the corrugation peaks (18) and corrugation troughs (19) continuously between a corrugation trough (19) and the next trough or between a corrugation peak (18) and the next peak.

3. A method according to Claim 1, **characterised in that** the wall thickness of the corrugated tube (11) existing in the corrugation troughs (19) and/or corrugation peaks (18) changes by steps, one or two such steps preferably being provided.

4. A method according to one of Claims 1 to 3, **characterised in that** the wall thickness of at least one of the layers (14, 15) at least in the region of a corrugation peak (18) is less than in the adjacent corrugation trough (19), preferably by at least 20 %.

5. A method according to Claim 4, **characterised in that** the wall thickness of at least one of the layers (14, 15) of each corrugation peak (18) is less than in an adjacent corrugation trough (19), preferably by at least 10 %.

6. A method according to one of Claims 1 to 5, **characterised in that** the corrugated tube (11) is designed so as to be double- or multi-layered at least over the part of its longitudinal extent in which the corrugation peaks (18) and corrugation troughs (19) are disposed, preferably over its whole length.

7. A method according to Claims 1 to 6, **characterised in that** at least one of the layers (14, 15) of the corrugated tube (11) [is]¹ provided with a plurality of openings (16, 24) disposed in the region of corrugation peaks (18).
¹ Plural verb in the source text.

8. A method according to Claim 7, **characterised in that** at least one corrugation peak (18), preferably several corrugation peaks (18), is/are provided with several openings (16, 24) spaced apart from one another in the circumferential direction of the corrugated tube (11).

9. A method according to Claim 7 or Claim 8, **characterised in that** at least the corrugation peak (18) adjoining the end of the corrugated tube (11) directed towards an adjacent Cardan joint (6, 26) is free of openings (16, 24) for all layers (14, 15) of the corrugated tube (11), preferably several corrugation peaks (18) adjoining this end of the corrugated tube (11) are free of openings (16,24).

10. A method according to one of Claims 7 to 9, **characterised in that** the corrugation troughs (19) at least up to a quarter of the height (H) between corrugation trough (19) and corrugation peak (18) are free of openings (16, 24).

11. A method according to one of Claims 1 to 10, **characterised in that** the layers (14, 15) consist of different materials.

12. A method according to Claim 11, **characterised in that** the outer layer consists of high-grade steel.

13. A method according to one of Claims 1 to 12, **characterised in that** a spacing material, preferably metal braid or wire mesh (25), is arranged between two layers (14, 15) at least over part of the length of the corrugated tube.

14. A method according to one of Claims 1 to 13, **characterised in that** the height (H) of the corrugation changes over the corrugated region, the spacing of the corrugation trough from the longitudinal axis (27) of the corrugated tube of one or more of the corrugation troughs adjacent to the adjacent Cardan joint (6, 26) being greater than the said spacing of corrugation troughs located further away from this Cardan joint (6, 26).

## Revendications

1. Procédé de fabrication d'un arbre de direction d'une colonne de direction (1) pour un véhicule automobile, comprenant au moins un segment (9, 10) prévu pour se déformer lors d'une collision, au moins le segment (9) déformable de ce type étant un tube ondulé (11) ayant au moins deux couches ondulées sur au moins une partie de son étendue longitudinale qui comprend au moins un des sommets d'ondulation (18) du tube ondulé (11),
**caractérisé en ce que**
pour la fabrication du segment (9) déformable en forme de tube ondulé (11) on emboîte l'un dans l'autre au moins deux tubes (12, 13) qui forment les couches (14, 15) du tube ondulé (11) fini et dont au moins un a été muni de zones présentant une épaisseur de paroi différente dans la zone dans laquelle se situent les ondulations du tube ondulé (11) à l'état imi, et les tubes (12, 13) emboîtés l'un dans l'autre sont munis conjointement d'ondulations, et à l'état fini du tube ondulé (11) dans un creux d'ondulation (19) respectif du tube ondulé (11) et/ou sur un sommet d'ondulation (18) respectif du tube d'ondulation (11) l'épaisseur de paroi d'au moins l'une des couches (14, 15) se réduit sur la zone des sommets d'ondulation (18) ou des creux d'ondulation (19) entre le côté tourné vers le joint de Cardan (6, 26) voisin et le côté du tube ondulé (11) détourné du joint de Cardan (6, 26) voisin.

2. Procédé selon la revendication 1,
**caractérisé en ce que**
l'épaisseur de paroi du tube ondulé (11) se réduit continuellement entre un creux d'ondulation (19) et le suivant ou entre un sommet d'ondulation (18) et le suivant, au moins sur une partie de la zone des sommets d'ondulation (18) et des creux d'ondulation (19).

3. Procédé selon la revendication 1,
**caractérisé en ce que**
l'épaisseur de paroi du tube ondulé (11) dans les creux d'ondulation (19) et/ou aux sommets d'ondulation (18) varie par paliers, de préférence en un ou deux paliers de ce type.

4. Procédé selon l'une quelconque des revendications 1 à 3,
**caractérisé en ce que**
l'épaisseur de paroi d'au moins l'une des couches (14, 15) est plus faible au moins dans la zone d'un sommet d'ondulation (18) que dans le creux d'ondulation (19) voisin, de préférence d'au moins 20 %.

5. Procédé selon la revendication 4,
**caractérisé en ce que**
l'épaisseur de paroi d'au moins l'une des couches (14, 15) de chaque sommet d'ondulation (18) est plus faible que dans un creux d'ondulation (19) voisin, de préférence d'au moins 10 %.

6. Procédé selon l'une quelconque des revendications 1 à 5,
**caractérisé en ce que**
le tube ondulé (11) présente deux ou plusieurs couches au moins sur la partie de son étendue longitudinale dans laquelle sont disposés les sommets d'ondulation (18) et les creux d'ondulation (19), de préférence sur toute sa longueur.

7. Procédé selon les revendications 1 à 6,
**caractérisé en ce qu'**
au moins l'une des couches (14, 15) du tube ondulé (11) est munie d'une pluralité d'ouvertures (16, 24) disposées dans la zone de sommets d'ondulation (18).

8. Procédé selon la revendication 7,
**caractérisé en ce qu'**
au moins un sommet d'ondulation (18), de préférence plusieurs sommets d'ondulation (18), est/sont muni(s) de plusieurs ouvertures (16, 24) distancées les unes des autres dans la direction périphérique du tube ondulé (11).

9. Procédé selon la revendication 7 ou 8,
**caractérisé en ce qu'**
au moins le sommet d'ondulation (18) adjacent à l'extrémité du tube ondulé (11) tournée vers un joint de Cardan (6, 26) voisin est exempt d'ouvertures (16, 24) pour toutes les couches (14, 15) du tube ondulé (11), de préférence plusieurs sommets d'ondulation (18) adjacents à cette extrémité du tube ondulé (11) sont exempts d'ouvertures (16, 24).

10. Procédé selon l'une quelconque des revendications 7 à 9,
**caractérisé en ce que**
les creux d'ondulation (19) sont exempts d'ouvertures (16, 24), au moins jusqu'à un quart de la hauteur (H) entre un creux d'ondulation (19) et un sommet d'ondulation (18).

11. Procédé selon l'une quelconque des revendications 1 à 10,
**caractérisé en ce que**
les couches (14, 15) sont réalisées à partir de matériaux différents.

12. Procédé selon la revendication 11,
**caractérisé en ce que** la couche extérieure est en acier noble.

13. Procédé selon l'une quelconque des revendications 1 à 12,
**caractérisé en ce qu'**
entre deux couches (14, 15) un matériau d'écartement, de préférence un treillis métallique ou une grille en fils de fer (25), est disposé au moins sur une partie de la longueur du tube ondulé.

14. Procédé selon l'une quelconque des revendications 1 à 13,
**caractérisé en ce que**
la hauteur (H) de l'ondulation varie sur la zone ondulée, et la distance du creux d'ondulation entre l'axe longitudinal (27) du tube ondulé et un ou plusieurs creux d'ondulation voisins du joint de Cardan (6, 26) voisin est supérieure à celle de creux d'ondulation plus éloignés de ce joint de Cardan (6, 26).
